# EUROPÄISCHE PATENTSCHRIFT

(11) **EP 0 294 318 B1**
(45) Veröffentlichungstag und Bekanntmachung des Hinweises auf die Patenterteilung: **03.02.1993**
(21) Anmeldenummer: 88730127.3
(22) Anmeldetag: 27.05.1988
(51) Int. Cl.: H04Q 11/04, H04Q 3/545, G06F 13/16, G06F 13/28

(54) **Schaltungsanordnung zur Steuerung von Parallelzugriffen zu dezentralen Speichereinrichtungen (Fehleradressenspeicher)**
Circuit arrangement for controlling the parallel access of decentralized memories (fault address memory)
Circuit pour la commande de l'accès parallèle de mémoires décentralisées (mémoire d'adresses fautives)

(30) Priorität: 04.06.1987 DE 3718985
(43) Veröffentlichungstag der Anmeldung: 07.12.1988
(73) Patentinhaber: SIEMENS AKTIENGESELLSCHAFT, 80333 München (DE)
(72) Erfinder: Pöttker, Hartmut, Dipl.-Ing., D-4630 Bochum (DE); Veith, Hans-Werner, D-4630 Bochum 7 (DE)

(56) Entgegenhaltungen:
- EP-A- 0 021 254
- ISS 1987, Phoenix, US, 15.-20. März 1987, Seiten B2.5.1-B2.5.7; J. LAMY et al.: "CCS No. 7 Transfer Point"
- ISS'81, Montréal, CA, 21.-25. September 1981, Seiten 23B.2.1-23B.2.6; F. BEHAGUE et al.: "CCITT No. 7 Commom Channel Signaling and the E10 and E12 Digital Switching Systems"
- TELCOM REPORT (SIEMENS), Band 9, Heft 4, Juli/August 1986, Seiten 257-263; H. FELLINGER et al.: "Höhere Steuerleistung im EWSD durch den Koordinationsprozessor CP 113"

## Beschreibung

Die Erfindung betrifft eine Schaltungsanordnung zur Steuerung eines digitalen Kommunikationssystems mit einem zentralen Datenprozessor und mit mehreren, periphere Einrichtungen steuernde, dezentralen Ein-Ausgabeprozessoren mit Speichereinrichtungen, zu denen der zentrale Datenprozessor und der jeweilige dezentrale Ein-Ausgabeprozessor jeweils mittels einer Mehrfachzugriffssteuerung einwirken. Eine derartige Anordnung ist aus ISS 1987, Phoenix, US, 15.-20. März 1987, Seiten B2.5.1-B2.5.7; J. LAMY et al.: "CCS No. 7 Transfer Point" bekannt.

Derart definierte Kommunikationssysteme stellen modular aufgebaute Nebenstellenanlagen mit wenigen Standardschnittstellen dar, die entsprechend der zu erfüllenden Aufgaben in unterschiedlichsten Anlagengrößen aufgebaut sind. Die Nebenstellenanlagen können sowohl an öffentliche Netze und Dienste - Fernsprechnetz, Teletexnetz etc. - als auch an private Netze - Unteranlagen, Querverbindungsleitungen - angeschlossen sein. Als Teilnehmeranschlüsse sind analoge und digitale Endgeräte vorgesehen. Außerdem bestehen über entsprechende Schnittstellen zusätzliche Anschlußmöglichkeiten von externen Geräten, wie Drucker, betriebstechnische Terminals (PC) usw..

Die Systemarchitektur der unterschiedlichen Kommunikationssysteme ist einheitlich in drei Ebenen strukturiert: Peripherie, dezentrale Ein-Ausgabeprozessoren und zentraler Datenprozessor.
Zur Peripherie gehören danach Baugruppen als Schnittstellen zu den angeschalteten Endgeräten und Leitungen (Teilnehmerschaltungen, Leitungsschaltungen) und Baugruppen für den Verbindungsaufbau, wie Signalisierungseinrichtungen, Sender und Empfänger. Die zeitkritische Bearbeitung der Peripherie wird durch die dezentralen Ein-Ausgabeprozessoren übernommen, wobei die Anzahl der peripheren Einrichtungen bzw. die der Anschlußeinheiten für jeden Ein-Ausgabeprozessor in Abhängigkeit der maximal zu verarbeitenden Gesamtdatenmenge begrenzt ist. Die Ein-Ausgabeprozessoren sind somit unter anderem für die Steuerung der Standardschnittstellen und lokalen Busse, der Ziffernauswertung, der Anschaltung von Ton- und Ruftakten und der sicherheitstechnischen Anzeigen vorgesehen.
Der zentrale Datenprozessor dagegen koordiniert die Steuerung sämtlicher im Kommunikationssstem vorhandener Einrichtungen über entsprechende Busverbindungen. Außerdem werden vom zentralen Datenprozessor die Rücksetz-Logik und sicherheitstechnische Vorgänge zentral gesteuert.

Die Schnittstelle zwischen der Peripherie und dem jeweiligen dezentralen Ein-Ausgabeprozessor wird durch eine HDLC-Standardschnittstelle gebildet, die in der peripheren Einrichtung enthalten ist. Dagegen wird die Schnittstelle zwischen dem dezentralen Ein-Ausgabeprozessor und dem zentralen Datenprozessor durch einen Mehrfachzugriffsspeicher gebildet, der von beiden Prozessoren beschrieben und ausgelesen werden kann. Die Steuerung dieses Mehrfachzugriffsspeichers erfolgt üblicherweise durch das eingesetzte Betriebssystem.

Wie bereits erwähnt, dient als Bindeglied zwischen dem zentralen Datenprozessor und der Peripherie der Ein-Ausgabeprozessor mit zwei peripheren Einrichtungen. Die peripheren Einrichtungen sind jeweils mit einer HDLC-Standardschnittstelle ausgestattet, über die der Datenaustausch zwischen dem Ein-Ausgabeprozessor und den angeschlossenen peripheren Einrichtungen erfolgt. Aus dynamischen Gründen werden diese zwei HDLC-Standardschnittstellen verschachtelt und im sogenannten DMA-Modus, im Direktzugriff-Verfahren betrieben.
Beim Zugriff des Datenprozessors auf den Mehrfachzugriffsspeicher wird der entsprechende Ein-Ausgabeprozessor in den sogenannten Hold-Zustand gesetzt, um einen fehlerhaften Datenaustausch über die HDLC-Standardschnittstellen zu vermeiden.

Während dieser Zeit ist also der Ein-Ausgabeprozessor blockiert und somit auch der Datenverkehr über die HDLC-Standardschnittstellen unterbunden. Die der Erfindung zugrunde liegende Aufgabe besteht darin, diesen Blockierungszustand zu vermeiden, ohne jedoch den aus dynamischen Gründen vorteilhaften Betrieb der HDLC-Standardschnittstellen verändern zu müssen. Erfindungsgemäß wird dies durch die Kombination der Merkmale des Patentanspruchs 1 erreicht.

Mit dem Eintragen der Zugriffsadressen des zentralen Datenprozessors und des dezentralen Ein-Ausgabeprozessors in den Mehrfachzugriffsspeicher ist erreicht, daß bei HDLC-Übertragungsfehlern im Zusammenhang mit dem Fehleradressenspeicher zunächst das Abarbeiten der Adressen des Mehrfachzugriffsspeichers in üblicher Weise verschachtelt erfolgen kann, um anschließend die Adressen des Fehleradressenspeichers sequentiell durch den Mikroprozessor des Ein-Ausgabeprozessors abzuarbeiten. Mit dieser sequentiellen Adressenverarbeitung ist ein gleichzeitiger Datenverkehr auf beiden HDLC-Standardschnittstellen ausgeschossen. Da außerdem mit dem Abarbeiten der Adressen des Fehleradressenspeichers der Zugriff des Datenprozessors auf den Ein-Ausgabeprozessor verhindert wird, kann auch der Mikroprozessor des Ein-Ausgabeprozessors nicht in den Haltezustand geschaltet werden.

Da diese Schaltmaßnahmen nur im Fehlerfall auftreten, kommt es lediglich durch das sequentielle Abarbeiten und durch das Sperren des zentralen Datenprozessors zu geringfügigen Dynamikverlusten, die jedoch einen fehlerfreien Datenverkehr sicher stellen.

Die Erfindung wird in einem figürlich dargestellten Ausführungsbeipiel näher erläutert, in dem lediglich die zum Verständnis notwendigen Schalteinrichtungen als Blockschaltbild dargestellt sind.

Der Ein-Ausgabeprozessor IOP enhält den Mikroprozessor MC mit der Steuerung des Direktzugriff-Verfahrens DMA. Weiterhin ist angedeutet, daß der zentrale Datenprozessor DP wie der Mikroprozessor MC Zugriff zu der Speichereinrichtung SP hat, die aus dem Mehrfachzugriffsspeicher DPR, dem Arbeitsspeicher MEM und dem Fehleradressenspeicher FSA gebildet ist. Weiterhin sind die peripheren Einrichtungen PBC mit ihren HDLC-Standardschnittstellen dargestellt, die vom Mikroprozessor MC des Ein-Ausgabeprozessors IOP und von der Speichereinrichtung SP gesteuert werden. Über die zwei im Ausführungsbeispiel dargestellten HDLC-Standardschnittstellen erfolgt der Datenaustausch zwischen dem Ein-Ausgabeprozessor IOP und den angeschlossenen, nicht dargestellten Teilnehmern.

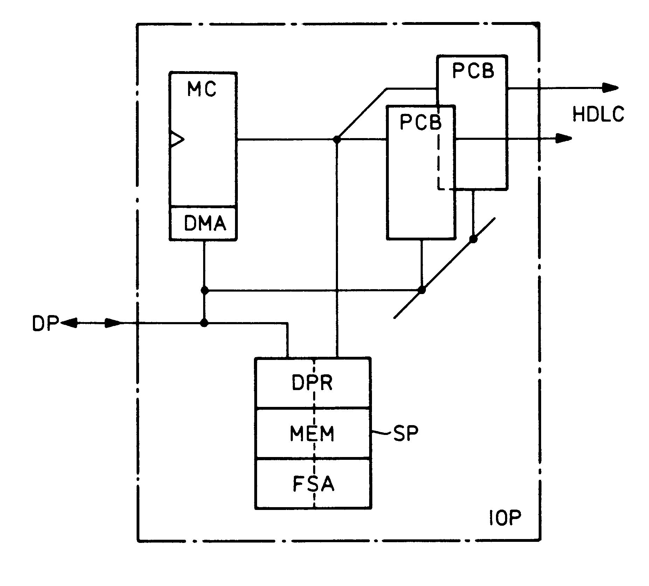

## Patentansprüche

1. Schaltungsanordnung zur Steuerung eines digitalen Kommunikationssystems mit einem zentralen Datenprozessor und mit mehreren, periphere Einrichtungen steuernde, dezentralen Ein-Ausgabeprozessoren mit Speichereinrichtungen, zu denen der zentrale Datenprozessor und der jeweilige dezentrale Ein-Ausgabeprozessor jeweils mittels einer Mehrfachzugriffssteuerung einwirken,
**gekennzeichnet durch** die Kombination der Merkmale
1.1 die Speichereinrichtungen (SP) weisen jeweils einen die Zugriffsadressen des zentralen Datenprozessos (DP) und die Zugriffsadressen eines Mikroprozessors (MC) des dezentralen Ein-Ausgangsprozessors (IOP) speichernden Mehrfachzugriffsspeicher (DPR) auf,
1.2 die Speichereinrichtungen (SP) sind jeweils mit einem durch den Mikroprozessor (MC) steuerbaren, bei HDLC-Übertragungsfehlern die Teilnehmeradressen der jeweils gestörten Teilnehmer aufnehmenden Fehleradressenspeicher (FSA) ausgestattet,
1.3 der Fehleradressenspeicher (FSA) enthält die Teilnehmeradressen der gestörten Teilnehmer in der Rangfolge des zeitlichen Eintreffens und ist durch den Mikroprozessor (MC) mit dem Mehrfachzugriffsspeicher (DPR) in der Weise verknüpft, daß das Abarbeiten der Adressen des Mehrfachzugriffsspeichers (DPR) verschachtelt und vorrangig gegenüber dem Fehleradressenspeicher (FSA) erfolgt,
1.4 das Abarbeiten der Adressen des Fehleradressenspeichers (FSA) erfolgt sequentiell am Ende eines Abfragezyklusses des Mehrfachzugriffsspeichers (DPR) durch den Mikroprozessor (MC) und bewirkt eine Zugriffssperre des zentralen Datenprozessors (DP) auf den dezentralen Ein-Ausgabeprozessor (IOP).

## Claims

1. Circuit arrangement for controlling a digital communications system having a central data processor and having a plurality of decentralised input/output processors which control peripheral devices and have memory means, to which the central data processor and the respective decentralised input/output processor have access via a multiple access controller in each case,
characterised by the combination of features:
1.1 the memory means (SP) have in each case a multiple access memory (DPR) storing the access addresses of the central data processor (DP) and the access addresses of a microprocessor (MC) of the decentralised input/output processor (IOP),
1.2 the memory means (SP) are equipped in each case with a fault address memory (FSA) which can be controlled by the microprocessor (MC) and receives the subscriber addresses of the respective faulty subscriber in the event of HDLC transmission faults,
1.3 the fault address memory (FSA) contains the subscriber addresses of the faulty subscribers in the chronological order of their arrival and is linked by the microprocessor (MP) to the multiple access memory (DPR) in such a way that the addresses of the multiple access memory (DPR) are processed in a nested manner and with priority in comparison with the fault address memory (FSA),
1.4 the addresses of the fault address memory (FSA) are processed sequentially at the end of a polling cycle of the multiple access memory (DPR) by the microprocessor (MC), causing the central data processor (DP) to be denied access to the decentralised input/output processor (IOP).

## Revendications

1. Montage pour la commande d'un système de communication numérique comportant un processeur central de données et plusieurs processeurs décentralisés d'entrée-sortie, qui commandent des dispositifs périphériques et comportent des dispositifs de mémoire sur lesquels le processeur central de données et le processeur décentralisé respectif d'entrée-sortie agissent respectivement au moyen d'une commande d'accès multiples,
caractérisé par la combinaison des caractéristiques
1.1 les dispositifs de mémoire (SP) possèdent chacun une mémoire à accès multiples (DPR), qui mémorise les adresses d'accès du processeur central de données (DP) et les adresses d'accès d'un microprocesseur (MC) du processeur décentralisé d'entrée-sortie (IOP),
1.2 les dispositifs de mémoire (SP) sont équipés chacun d'une mémoire d'adresses de défauts (FSA) qui peut être commandée par le microprocesseur (MC) et reçoit, dans le cas d'erreurs de transmission HDLC, les adresses des abonnés pour lesquelles il existe respectivement une perturbation,
1.3 la mémoire d'adresses de défauts (FSA) contient les adresses des abonnés pour lesquelles il existe une perturbation, dans l'ordre de leur arrivée dans le temps et est combinée, par le microprocesseur (MC), à la mémoire à accès multiples (DPR) de telle sorte que le traitement des adresses de la mémoire à accès multiples (DPR) s'effectue de façon imbriquée avec priorité par rapport à la mémoire d'adresses d'erreurs (FSA),
1.4 le traitement des adresses de la mémoire d'adresses de défauts (FS) s'effectue séquentiellement à la fin d'un cycle d'interrogation de la mémoire à accès multiples (DPR) par le microprocesseur (MC) et provoque un blocage des accès du processeur central de données (DB) au processeur décentralisé d'entrée-sortie (IOP).
